# EUROPÄISCHE PATENTANMELDUNG

(11) **EP 2 581 344 A1**
(43) Veröffentlichungstag der Anmeldung: **17.04.2013**
(21) Anmeldenummer: 12184705.7
(22) Anmeldetag: 17.09.2012
(51) Int. Cl.: C02F 1/00, C02F 1/32

(54) **Anordnung zur Behandlung von Flüssigkeiten, insbesondere zur Wasserbehandlung**

(30) Priorität: 14.10.2011 DE 202011051637 U
(71) Anmelder: Uvion GmbH, 09120 Chemnitz (DE)
(72) Erfinder: Thuß, Uwe, 09123 Chemnitz (DE)
(74) Vertreter: Sperling, Thomas

(57) **Zusammenfassung**

Die Erfindung betrifft eine Anordnung zur Behandlung von Flüssigkeiten (1), insbesondere zur Wasserbehandlung, wobei eine UV-Behandlungsvorrichtung (2) und eine Ionenbehandlungsvorrichtung (5) in einem zu behandelnden Flüssigkeitsstrom seriell hintereinander angeordnet sind und dass zwischen der UV-Behandlungsvorrichtung (2) und der Ionenbehandlungsvorrichtung (5) parallel zum Flüssigkeitsstrom ein Probenahmestrom durch eine seriell hintereinander angeordnete pH-Messzelle (3) und ein photometrischer Sensor (4) leitbar ausgebildet ist und dass ein Steuermodul (6) vorgesehen ist, welches mit den Daten der pH-Messung den pH-Wert für die photometrische Messung und den Daten der photometrischen Messung die Ionenbehandlungsvorrichtung (5) steuerbar ausgebildet ist.

## Beschreibung

Die Erfindung betrifft eine Anordnung zur Behandlung von Flüssigkeiten, insbesondere zur Wasserbehandlung. Die Anordnung ist zur gesteuerten Behandlung von Flüssigkeiten mit einer Messanordnung zur Bestimmung von Parametern der Wasserqualität, insbesondere für die Bestimmung der Wasserqualität in Schwimmbecken von Schwimmbädern oder Swimming Pools kombiniert. Weiterhin ist die Erfindung einsetzbar für unterschiedlichste Bereiche der Wasserqualitätsüberwachung und Wasseraufbereitung, wie beispielsweise in der Lebensmittelindustrie, der chemischen Industrie und der galvanischen Industrie.

Die Wasserqualität hat in vielen der genannten Anwendungsgebieten eine große Bedeutung, sodass die Überwachung der Parameter der Wasserqualität eine wichtige Komponente und Voraussetzung für das bestimmungsgemäße Betreiben verschiedenster Prozesse und Anwendungen ist.

Häufig ist die Bestimmung der Parameter der Wasserqualität gekoppelt mit Regelungsverfahren, die anhand der ermittelten Parameter die festgestellte Wasserqualität bei Abweichungen zum Sollwert derart durch geeignete Maßnahmen beeinflussen, dass die geforderten Soll-Parameterbereiche für die Wasserqualität geregelt und damit eingehalten werden.

In bestimmten Anwendungsbereichen wird die Wasserqualität anhand der Bestimmung des pH-Wertes und der Ionenkonzentration von beispielsweise

Metallionen charakterisiert. Der Überwachung des pH-Wertes des Wassers und der Metallionenkonzentration kommt somit innerhalb der Parameter eine ganz besondere Bedeutung zu. Es besteht beispielsweise eine signifikante Korrelation zwischen dem pH-Wert des Wasser sowie der Metallionenkonzentration von Kupfer- oder Silberionen zum Hygienezustand des Wassers in Schwimmbecken.

Weiterhin spielen photometrische Messverfahren zur Bestimmung der Wasserqualität im Zusammenhang mit Wasserbehandlungsanlagen eine große Rolle.

Im Stand der Technik ist beispielsweise aus der DE 10 2007 041 740 A1 eine Vorrichtung zur Analyse von Flüssigkeitsproben bekannt, welche eine Mischvorrichtung mit einer Förderpumpe zum Mischen der Flüssigkeitsprobe mit einem Reagenz in einem definierten Mischungsverhältnis enthält, welche darüber hinaus mindestens einen Sensor zum Erfassen einer Eigenschaft des Gemisches aus der Flüssigkeitsprobe und dem Reagenz aufweist, anhand derer eine Messgröße der Flüssigkeitsgröße zu bestimmen ist. Die Vorrichtung enthält weiterhin eine Auswerteeinheit, welche anhand mindestens eines Signals mindestens eines Sensors beziehungsweise anhand des zeitlichen Verlaufes eines Signals die Funktion der Mischvorrichtung überprüft. Dabei wird die Flüssigkeitsprobe einer fotometrischen Messung unterworfen, welche durch die zugeführten Reagenzien und einer Mischung derselben mit dem Flüssigkeitsstrom im Durchflussverfahren realisiert wird.

Weiterhin ist aus der DE 196 84 695 C2 eine Vorrichtung zur automatischen und kontinuierlichen Analyse von Flüssigkeitsproben durch Mischen mit verschiedenen Reagenzien mit Hilfe einer Anordnung von Mikropumpen, einer Mischkammer, einem Reaktionskanal und mindestens einem Auswertesensor bekannt, welche dadurch gekennzeichnet ist, dass der Reaktionskanal zwischen der Mischkammer und dem Auswertesensor angeordnet ist.

Aus der US 4,853,336 A ist eine Vorrichtung zur kontinuierlichen Untersuchung von flüssigen Proben offenbart, wobei mehrere Flüssigkomponenten zu dosiert, gemischt und die Proben anschließend analysiert werden.

Aus der EP 0 245 309 B1 geht eine Analysevorrichtung und eine Methode hervor, mit welcher Flüssigkeiten mittels automatischer Titration untersucht werden.

Weiterhin ist im Stand der Technik nach der DE 38 40 103 C1 ein Verfahren zum Entkeimen von Wasser bekannt, wobei Indikatoren auf der Basis quaternärer Ammoniumverbindungen zur fotometrischen Analyse von Wasser eingesetzt werden.

Den Verfahren und Vorrichtungen nach dem Stand der Technik ist der Nachteil zu eigen, dass eine Untersuchung von Flüssigkeitsproben und eine unmittelbar damit verbundene Behandlung des Flüssigkeitsstromes nicht realisiert wird. Weiterhin werden Analysesysteme als anfällig in Bezug auf wechselnde Randbedingungen beschrieben und die Kosten zum Betreiben hochspezialisierter Analysegeräte sind häufig hoch und die Geräte sind sehr empfindlich.

Davon ausgehend ist es Aufgabe der Erfindung, eine Anordnung zur Behandlung von Flüssigkeiten zur Verfügung zu stellen, die die durchströmende Flüssigkeit effizient in Bezug auf die hygienische oder mikrobiologische Belastung reduziert und die eine hohe Sicherheit der Behandlung der Flüssigkeit biete und dabei geringe Kosten der Behandlung und Analyse verursacht.

Die Aufgabe der Erfindung wird durch eine Anordnung nach Schutzanspruch 1 gelöst, Weiterbildungen der Erfindung sind in den Unteransprüchen angegeben.

Insbesondere wird die Aufgabe durch eine Anordnung zur Behandlung von Flüssigkeiten gelöst, wobei eine UV-Behandlungsvorrichtung und eine lonen-Behandlungsvorrichtung in einem zu behandelnden Flüssigkeitsstrom seriell hintereinander angeordnet sind. Zwischen der UV-Behandlungsvorrichtung und der Ionen-Behandlungsvorrichtung ist parallel zum Flüssigkeitsstrom ein Probenahmestrom durch eine seriell hintereinander angeordnete pH-Messzelle und einen fotometrischen Sensor ausgebildet. Weiterhin ist ein Steuermodul vorgesehen, welches mit den Daten der pH-Messung den pH-Wert für die fotometrische Messung und den Daten der fotometrischen Messung die lonen-Behandlungsvorrichtung steuert.

Nach einer vorteilhaften Ausgestaltung der Erfindung ist die Anordnung den Flüssigkeitsstrom kontinuierlich behandelnd und den Probenahmestrom diskontinuierlich messend ausgebildet.

Nach einer besonders vorteilhaften Ausgestaltung der Erfindung ist der fotometrische Sensor aus einer in einem Gehäuse integrierten Messzelle ausgebildet, wobei in der Messzelle ein Mischorgan angeordnet ist, welches vorteilhaft als Magnetrührer ausgebildet ist.

Bevorzugt ist der Antrieb für das Mischorgan in das Gehäuseunterteil integriert und die Messzelle unmittelbar über diesem Antrieb angeordnet, sodass der Magnetrührer unmittelbar von dem Antrieb ohne mechanische Durchführungen in die Messzelle antreibbar ausgebildet ist.

Das Gehäuse selbst ist bevorzugt lichtundurchlässig und lichtabsorbierend ausgebildet, sodass für die fotometrische Messung die Störeffekte durch Fremdlichteinfluss gering gehalten beziehungsweise ausgeschalten werden.

Die Messzelle ist bevorzugt derart konstruiert, dass vertikal von unten nach oben der Eingang der Messzelle für die Probenflüssigkeit, die Lichtquelle und der Fototransistor auf einer Ebene, der Ausgang der Messzelle und schließlich die Reagenzienzuführung angeordnet sind.

Das Gehäuse ist vorteilhaft zweiteilig aus einem Gehäuseunterteil und einem Gehäuseoberteil und einem zwischen diesen Gehäuseteilen dichtend eingepassten vertikal angeordneten Glaszylinder als Messzelle ausgebildet.

Nach einer besonders vorteilhaften Ausgestaltung der Erfindung ist zur Bevorratung der flüssigen Reagenzien für die Anordnung ein Beutel vorgesehen, beziehungsweise sind je nach Erfordernis mehrere verschiedene Reagenzien in verschiedenen Beuteln entsprechend vorgesehen.

Vorteilhaft ist weiterhin die Anordnung einer Befüllungspumpe zur Befüllung des pH-Sensors und des fotoemtrischen Sensors, die zwischen dem Ausgang der Messzelle und vor der Proberückleitungsstelle angeordnet ist.

Die Konzeption der Erfindung besteht in der Ausbildung einer automatischen Messung der Ionenkonzentration in flüssigen Medien, wobei der laufende Prozess der Flüssigkeitsbehandlung zur Keimreduzierung kontinuierlich im Durchflussbetrieb erfolgt.

Basierend auf dem im Bypass gewonnenen Messergebnis der fotometrischen Messzelle wird die Ionenkonzentration der Ionenbehandlungsvorrichtung durch die Regelung des Ionisierstromes an die erforderliche Größe angepasst und gesteuert.

Besonders vorteilhaft ist, dass kein manueller Eingriff einer Bedienperson erforderlich ist, um die Behandlung oder Messung des Flüssigkeitsstromes zu steuern. Im laufenden Prozess wird automatisch eine Probe des zu untersuchenden Mediums durch eine Befüllungspumpe in die Messzelle befördert, wobei die Befüllungspumpe so ausgelegt ist, dass sie durch ihre Leistung eine komplette Spülung der Messzelle erreicht. Nach der Befüllung wird dem Medium etwas Zeit gelassen in einer Absatzphase, damit eventuelle Luftblasen aufsteigen können und das Messergebnis nicht verfälschen. Um diesen Vorgang zu unterstützen, wird bevorzugt ein Magnetrührer eingesetzt, dessen Antrieb unter der Messzelle angeordnet ist. Der Magnetrührstab selbst ist in die Messzelle integriert. Der Einsatz eines Magnetrührers ist besonders vorteilhaft dahingehend, dass keine mechanische Durchführung zur Übertragung der Kraft auf das Rührorgan erforderlich ist, die zu Undichtigkeiten an der Messzelle führen könnte.

Nach der Absatzphase wird von einer Lichtquelle ein definiertes Lichtsignal vorbestimmter Wellenlänge durch die Probe gesendet und von einem Fototransistor aufgefangen. Die Intensität des aufgefangenen Lichtsignals wird im Fototransistor umgewandelt und in Millivolt ausgegeben. Die Quantität dieses Signals bestimmt die Durchlässigkeit des Mediums für die entsprechende Wellelänge, wobei diese erste Messung als Nullmessung ausgeführt wird. Nach der Nullmessung wird dem Medium eine oder mehrere Reagenzien mit beispielsweise Indikatoren über spezielle Magnetmembranpumpen zu dosiert. Die Fördermenge beträgt dabei circa 25 µl pro Hub, wodurch eine hohe Genauigkeit der Dosierung erreicht wird. Die Anzahl der benötigten Reagenzien richtet sich nach den zu bestimmenden Parametern. In einer bevorzugten Ausgestaltung der Erfindung werden Kupferionen gemessen, wobei in diesem Falle eine Puffferlösung für die pH-Wert Einstellung und eine Indikatorlösung zu zudosieren sind.

Die Reagenzien werden in speziellen Beuteln aufbewahrt, die Infusionsbeuteln ähnlich sind, wodurch keine Luft mit den Reagenzien in Berührung kommen kann und die Reagenzien somit in ihrer Beständigkeit weitgehend unverändert bleiben. Im Unterschied zur Aufbewahrung der Reagenzien in Flaschen kann bei dieser Bevorratungsart auf ein Belüftungsloch verzichtet werden, wodurch ein Luftkontakt der Reagenzien effizient unterbunden wird. Nach der Dosierung der Reagenzien in Abhängigkeit von dem Volumen des zu untersuchenden Mediums, welches die Messzelle vorgibt, mischt der Magnetrührer die Reagenzien mit dem Medium und es beginnt eine chemische Reaktion. Die als Indikatoren zugesetzten Reagenzien reagieren mit den zu untersuchenden Parametern, beispielsweise bei der Reaktion mit den Kupferionen, was zu einer Verfärbung des Wassers führt. Nach einer gewissen Zeit wird erneut ein Lichtsignal von der Lichtquelle abgegeben und vom Fototransistor aufgefangen. Basierend auf der Verfärbung des Mediums durch die Reagenzien gelangt nun weniger Licht durch das Medium. Aufgrund dieser Änderung der aufgefangenen Lichtintensität kann die Konzentration der zu untersuchenden Parameter berechnet werden. Nach der Messung wird die Befüllungspumpe wieder in Gang gesetzt, um die Messzelle zu spülen und Anlagerungen aus dem als Glaszylinder ausgebildeten Messzelle zu verhindern. Der Glaszylinder ist dabei aus speziellem optischem Glas, welches kaum Brechung besitzt und das Lichtsignal somit kaum schwächt. Die Messzelle selbst ist aus schwarzem Kunststoff gefertigt, damit die zur Messung notwendigen Lichtsignale nicht durch die Umgebung gestört werden. Die Befüllung der Messzelle erfolgt so, dass das Medium durch die Messzelle gesaugt wird, wodurch eine wesentlich bessere Spülung erreicht und der Füllstand der Messzelle genau definierbar und einstellbar ist.

Es erfolgt somit eine diskontinuierliche intermittierende getaktete Messung der Ionenkonzentration mittels einer fotometrischen Methode, wobei das Messvolumen bei circa 12 - 14 ml liegt. Die gesamte Anordnung folgt dem Konzept, dass eine stetige Bestrahlung des Flüssigkeitsstromes mit ultraviolettem Licht erfolgt und aus diesem behandelten Flüssigkeitsstrom im Bypass ein Probenahmestrom abgezweigt wird, welcher dann intermittierend untersucht wird. Die Ergebnisse der Untersuchung fließen dann über die Ionisierung in die der UV-Behandlung nachfolgende Ionen-Behandlung des Flüssigkeitsstromes ein.

Als Vorteile der Anordnung sind zu nennen, dass eine hervorragende Durchmischung des zu untersuchenden Mediums durch den in die Messzelle integrierten Magnetrührer erfolgt, wobei aufgrund der Eigenschaft des Magnetrührers kein Wellendurchgang für den mechanischen Energieeintrag in das zu mischende System erforderlich ist, wodurch das Problem der Abdichtung entfällt.

Ein weiterer wesentlicher Punkt ist, dass die Befüllungspumpe das zu untersuchende Medium durch die Messzelle hindurch saugt, wodurch gewährleistet ist, dass immer ein gleiches und reproduzierbares Volumen an Messmedium in der Messzelle ist. Weiterhin wird durch diesen Aufbau gewährleistet, dass ein Reservoir an Luft in der Messzelle stehen bleibt, was wichtig für die genau Zudosierung der Reagenzien ist. (Wie wird das realisiert?)

Zusätzlich ist die Befüllungspumpe vom Durchsatz so gewählt, dass das Messmedium so stark durch die Messzelle strömt, dass sich keine Ablagerungen bilden.

Weitere Einzelheiten, Merkmale und Vorteile der Erfindung ergeben sich aus der nachfolgenden Beschreibung von Ausführungsbeispielen mit Bezugnahme auf die zugehörigen Zeichnungen. Es zeigen:
- Fig. 1:: Anordnung zur Behandlung von Flüssigkeiten im Prinzipschaltbild,
- Fig. 2:: Messzelle zur fotometrischen Messung der Ionenkonzentration von Flüssigkeiten.

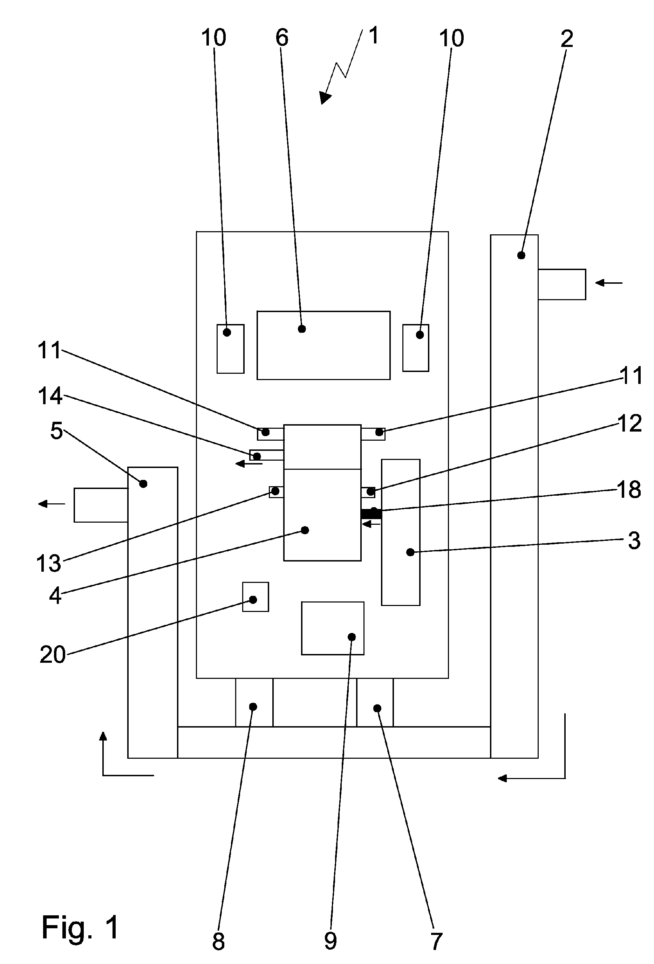

In Figur 1 ist eine Anordnung zur Behandlung von Flüssigkeiten schematisch dargestellt. Die Anordnung 1 besteht im Wesentlichen aus einer UV-Behandlungsvorrichtung 2 auf der rechten Seite, in welche am oberen Ende die Flüssigkeit einströmt und die UV-Behandlungsvorrichtung 2 nach unten durchströmt. Die UV-Behandlung erfolgt auf dem Weg der Flüssigkeit vom Eintritt in die UV-Behandlungsvorrichtung 2 nach unten. Nach der UV-Behandlung gelangt der Flüssigkeitsstrom am unteren Ende der UV-Behandlungsvorrichtung 2 in eine vertikale Verbindungsleitung, die an der Ionenbehandlungsvorrichtung 5 endet, in welche der Flüssigkeitsstrom unten eintritt, durch diese hindurch strömt und oben, durch Pfeile schematisch angedeutet, nach links die Ionenbehandlungsvorrichtung 5 verlässt.

Dem Flüssigkeitsstrom wird intermittierend auf dem Wege von der UV-Behandlungsvorrichtung 2 zur Ionenbehandlungsvorrichtung 5 an der Probeentnahmestelle 7 ein Probenahmestrom abgenommen, der nach erfolgter Untersuchung über die Proberückleitungsstelle 8 dem Flüssigkeitsstrom wieder zugeführt wird.

Zwischen der Probeentnahmestelle 7 und der Proberückleitungsstelle 8 durchläuft der Proberücknahmestrom den pH-Sensor 3 und gelangt in den dahinter geschaltenen fotometrischen Sensor 4. In dem fotometrischen Sensor 4 wird der Probenahmestrom über den Eingang 18 der Messzelle im unteren Bereich aufgegeben. Mit der oberhalb angeordneten Lichtquelle 12, die im dargestellten Ausführungsbeispiel als LED ausgebildet ist, und dem auf der gleichen Ebene angeordneten Fototransistor 13 wird die fotometrische Messung ausgeführt. Der Probenahmestrom verlässt über den Ausgang 14 der Messzelle dieselbe und gelangt zur Befüllungspumpe 20 und wird von dieser in den Flüssigkeitsstrom über die Proberückleitungsstelle 8 eingespeist.

Die zur Messung erforderlichen Reagenzien, in diesem Falle ein pH-Wert steuerndes Reagenz, eine Pufferlösung, und eine Indikatorlösung für die fotometrische Messung werden an der Reagenzienzuführung 11 in die Messzelle 17 eingespeist. Dazu wird jeweils eine Reagenziendosierpumpe 10, die als Membranpumpe ausgebildet ist, eingesetzt.

Die Messung und Steuerung der Zugabe der Reagenzien sowie der Ionisierung für die nachgeschaltete Flüssigkeitsbehandlung wird über ein Steuermodul 6 realisiert, welche im oberen Bereich der Anordnung platziert ist.

Nicht dargestellt ist der vorteilhafte Einsatz von mit flüssigen Reagenzien gefüllten Beuteln, durch welche die Reagenzien für die Messungen vorgehalten werden.

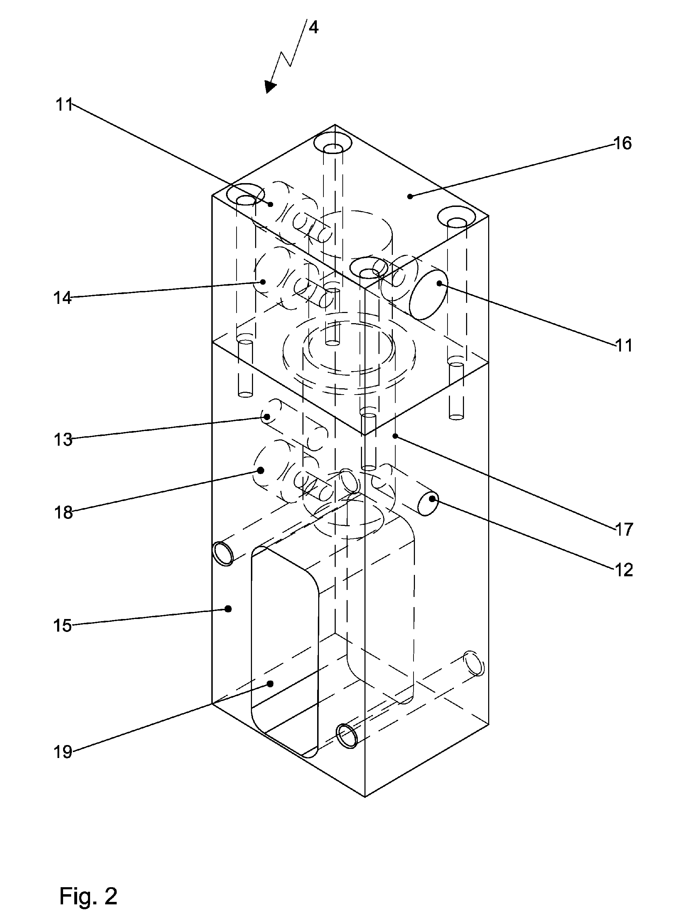

In Figur 2 ist ein fotometrischer Sensor 4 im Detail dargestellt. Der fotometrische Sensor 4 besteht im Wesentlichen aus einem Gehäuseunterteil 15 und einem Gehäuseoberteil 16. Im Gehäuseunterteil 15 ist der Antrieb 19 für das Mischorgan integriert und über diesem Antrieb ist die fotometrische Messzelle 17 als hohlzylindrischer Körper senkrecht stehend angeordnet. Der Probenahmestrom gelangt durch den Eingang 18 der Messzelle 17 in diese hinein. Oberhalb des Eingangs sind auf einer Ebene die Lichtquelle 12 und der Fototransistor 13 gegenüberliegend angeordnet, sodass sich zwischen diesen das zu vermessende Probemedium befindet.

Im oberen Bereich der Messzelle 17 befindet sich dann der Ausgang 14 des Probenahmestromes aus der Messzelle 17 und am Kopf der Messzelle 17 sind die Reagenzienzuführungen 11 angeordnet. Die Anordnung wird in folgender Weise zur Behandlung und Messung von Flüssigkeiten eingesetzt.

Aus einem laufenden Behandlungsprozess werden Flüssigkeitsproben mittels einer Befüllungspumpe 20 in die Messzelle 17 gesaugt, wobei auf dem Weg in die Messzelle 17 der pH-Wert mit einem pH-Sensor 3 festgestellt und an das Steuermodul übertragen wird. Die Anordnung und Konstruktion der Befüllungspumpe 20 und der Messzelle 17 ermöglichen es, genau definierte Mengen der zu untersuchenden Flüssigkeit in die Messzelle 17 zu befördern. Nach der Befüllung der Messzelle 17 wird dem Medium etwas Zeit gegeben, sich zu beruhigen, um zu verhindern, dass eventuell eingebrachte Luftblasen die Messung beeinflussen. Nach der Beruhigung wird von der Lichtquelle 12 ein Lichtsignal mit einer definierten Wellenlänge durch das Probenahmemedium gesendet und von dem Empfänger, dem Fototransistor 13, aufgenommen. Der empfangene Lichtwert wird als Nullwert für die darauffolgende Messung angenommen. Dies ist notwendig, da das zu messende Medium stets einen anderen Transmissionswert haben kann und das Lichtsignal immer unterschiedlich stark durch das Medium absorbiert wird. Außerdem hat die Nullmessung die Bewandtnis, dass die mit der Zeit eintretende Strahlungsintensitätabschwächung der Lichtquelle berücksichtigt wird. Nach der sogenannten Nullmessung wird dem Medium in der Messzelle 17 mindestens ein Reagenz über die Reagenzienzuführung 11 zu dosiert. Dies erfolgt in Abhängigkeit der Größe der Messzelle 17 und dem Volumen des zu untersuchenden Mediums. Das Reagenz wird über eine Reagenziendosierpumpe 10, bevorzugt als Membrandosierpumpe ausgebildet, zu dosiert, da diese sehr genau dosiert und über einen längeren Zeitraum auch im Gegensatz zu Schlauchdosierpumpen keine Genauigkeit verliert.

Um eine ausreichende Vermischung des Mediums und der Reagenz zu erzielen und um Konzentrationsunterschiede in der Messzelle zu verhindern und eine homogene Probe zu für die Messung zu erzeugen, werden die Flüssigkeiten in der Messzelle 17 mit einem Rührwerk vermischt. Besonders bevorzugt wird ein Magnetrührer eingesetzt. Dieser ist aus einem Magnetrührstab, welcher in der Messzelle untergebracht ist, und dem Antrieb, welcher außerhalb der Messzelle 17, aufgebaut. Der Antrieb ist im dargestellten Beispiel unterhalb der Messzelle angeordnet. Durch das Magnetfeld wird der Magnetrührstab in der Messzelle 17 zum Rotieren gebracht, was zur Vermischung der Probenahmeflüssigkeit mit den Reagenzien in der Messzelle führt. Diese Vorgehensweise ist besonders vorteilhaft, da die Messung unmittelbar nach dem Mischprozess erfolgen kann, wodurch zwischenzeitliche Veränderungen zwischen dem Mischen und dem Messen weitgehend ausgeschlossen werden. Durch die Vermischung des Mediums und der Indikatorlösung wird eine chemische Reaktion ausgelöst, welche abhängig von den zu untersuchenden Parametern der Reagenz ist und das Medium farblich verändert. Die farbliche Veränderung ist Basis für die nachfolgende fotometrische Messung. Nachdem das Medium mit den Reagenzien vermischt wurde, wird etwas Zeit gegeben, damit die chemische Reaktion vollständig ablaufen kann und damit eventuelle Luftblasen, welche durch den Mischvorgang in das Medium eingebracht wurden, wieder entweichen können, da diese das Messergebnis verfälschen würden.

Nach der Beruhigung des Mediums wird erneut von der Lichtquelle ein Lichtsignal durch das Messmedium zu dem Empfänger gesendet und der empfangene Lichtwert wird ausgelesen. Durch die Farbveränderung des Mediums, basierend auf der chemischen Reaktion der zugegebenen Reagenz und die Konzentration des zu untersuchenden Parameters des Mediums, verändert sich der Transmissionswert des Mediums. Das bedeutet, dass entsprechend weniger Licht der definierten Wellenlänge durch das Medium gelangen kann. Dieser Unterschied wird zwischen Messung und Nullmessung ermittelt und gibt Rückschlüsse auf die Konzentration des zu untersuchenden Parameters. Nach erfolgter Messung wird die Messzelle gespült, damit sich keine eventuellen Ablagerungen durch die mit dem Medium vermischte Reagenz an der Lichtquelle und dem Empfänger bilden können.

Im vorliegenden Fall wird in der Anwendung zur Behandlung von Swimming-Pool-Wasser eine Pufferlösung zugegeben, welche stark ammoniakhaltig ist und eine Einstellung des pH-Wertes ermöglicht und als Reagenz zur fotometrischen Messung wird eine Indikatorlösung verwendet, welche Cuprizon als Kupferindikator enthält. Je nach Konzentration an Kupfer-II-Ionen im Poolwasser verfärbt sich die Probe ins bläuliche. Dadurch wird das Lichtsignal geschwächt und der Unterschied zwischen der eigentlichen Messung und der Nullmessung gibt Aufschlüsse über die Konzentration Kupferionen in der Probe. Die Befüllung der Messzelle wird über eine Getriebepumpe realisiert, die einen hohen Volumenstrom bei geringer Baugröße erreicht. Dies ist wichtig, damit die Messzelle 17 ausreichend gespült wird. Die Dosierung der Reagenzien wird durch Magnetmembranpumpen realisiert, welche auch nach langer Einsatzdauer immer konstant fördern. Die eingesetzte Lichtquelle ist eine LED, welche ein Lichtsignal in einer genau definierten Wellenlänge abgibt. Die Wellenlänge des verwendeten Lichtes ist abhängig von der Verfärbung des Mediums mit dem Indikator.

Des Weiteren besteht die Möglichkeit diverse Parameter von Flüssigkeiten über diese Messapparatur und Anordnung zu messen, wie zum Beispiel den pH-Wert, bestimmte Metallionen oder auch den Chlorgehalt. Besonders bevorzugt ist die Anordnung der Befüllungspumpe 20 vor der Rückdosierung des Probenahmestromes in den Flüssigkeitsstrom, dadurch wird der Probenahmestrom durch die Messzelle 17 gesaugt, wodurch gewährleistet wird, dass sich immer ein gleiches Volumen an Medium in der Messzelle 17 befindet, was für die Zugabe des Indikators von entscheidender Bedeutung ist.

### LISTE DER BEZUGSZEICHEN

- 1: Anordnung zur Behandlung von Flüssigkeiten
- 2: UV-Behandlungsvorrichtung
- 3: pH-Sensor
- 4: Photometrischer Sensor,
- 5: Ionenbehandlungsvorrichtung
- 6: Steuermodul
- 7: Probeentnahmestelle
- 8: Proberückleitungsstelle
- 9: Dosierpumpe für pH-Messung
- 10: Reagenziendosierpumpe
- 11: Reagenzienzuführung für Messzelle 17
- 12: Lichtquelle
- 13: Phototransistor
- 14: Ausgang Messzelle
- 15: Gehäuseunterteil
- 16: Gehäuseoberteil
- 17: Photometrische Messzelle
- 18: Eingang Messzelle
- 19: Antrieb für Mischorgan
- 20: Befüllungspumpe

## Patentansprüche

1. Anordnung zur Behandlung von Flüssigkeiten (1), insbesondere zur Wasserbehandlung, wobei eine UV-Behandlungsvorrichtung (2) und eine Ionenbehandlungsvorrichtung (5) in einem zu behandelnden Flüssigkeitsstrom seriell hintereinander angeordnet sind und dass zwischen der UV-Behandlungsvorrichtung (2) und der Ionenbehandlungsvorrichtung (5) parallel zum Flüssigkeitsstrom ein Probenahmestrom durch eine seriell hintereinander angeordnete pH-Messzelle (3) und ein photometrischer Sensor (4) leitbar ausgebildet ist und dass ein Steuermodul (6) vorgesehen ist, welches mit den Daten der pH-Messung den pH-Wert für die photometrische Messung und den Daten der photometrischen Messung die Ionenbehandlungsvorrichtung (5) steuerbar ausgebildet ist.

2. Anordnung (1) nach Anspruch 1, **dadurch gekennzeichnet, dass** die Anordnung (1) den Flüssigkeitsstrom kontinuierlich behandelnd und den Probenahmestrom diskontinuierlich messend ausgebildet ist.

3. Anordnung (1) nach Anspruch 1 oder 2, **dadurch gekennzeichnet, dass** der photometrische Sensor (4) aus einer in ein Gehäuse (15, 16) integrierten Messzelle (17) ausgebildet ist, wobei in der Messzelle (17) ein Mischorgan angeordnet ist.

4. Anordnung (1) nach Anspruch 3, **dadurch gekennzeichnet, dass** das Mischorgan als Magnetrührer ausgebildet ist.

5. Anordnung (1) nach Anspruch 3 oder 4, **dadurch gekennzeichnet, dass** der Antrieb für das Mischorgan (19) in das Gehäuseunterteil (15) integriert und die Messzelle (17) darüber angeordnet ist.

6. Anordnung (1) nach einem der Ansprüche 3 bis 5, **dadurch gekennzeichnet, dass** das Gehäuse (15, 16) lichtundurchlässig und lichtabsorbierend ausgebildet ist.

7. Anordnung (1) nach einem der Ansprüche 3 bis 6, **dadurch gekennzeichnet, dass** vertikal von unten nach oben der Eingang (18) der Messzelle (17), die Lichtquelle (12) und der Phototransistor (13) auf einer Ebene, der Ausgang (14) und die Reagenzienzuführung (11) der Messzelle (17) angeordnet sind.

8. Anordnung (1) nach einem der Ansprüche 3 bis 7, **dadurch gekennzeichnet, dass** das Gehäuse zweiteilig aus einem Gehäuseunterteil (15) und einem Gehäuseoberteil (16) und einem zwischen diesen Gehäuseteilen dichtend eingepassten vertikal angeordneten Glaszylinder als Messzelle (17) ausgebildet ist.

9. Anordnung (1) nach einem der Ansprüche 1 bis 8, **dadurch gekennzeichnet, dass** zur Bevorratung der flüssigen Reagenzien für die Anordnung (1) Beutel vorgesehen sind.

10. Anordnung (1) nach einem der Ansprüche 1 bis 9, **dadurch gekennzeichnet, dass** zur Befüllung des pH-Sensors (3) und des photometrischen Sensors (4) eine Befüllungspumpe (20) vorgesehen ist, die zwischen dem Ausgang (14) der Messzelle und vor der Proberückleitungsstelle (8) angeordnet ist.
